# EUROPEAN PATENT APPLICATION

(11) **EP 2 556 984 A1**
(43) Date of publication of application: **13.02.2013**
(21) Application number: 12177574.6
(22) Date of filing: 24.07.2012
(51) Int. Cl.: B60L 11/18, G01S 17/46

(54) **Parking assist for a vehicle capable of wireless charging.**

(30) Priority: 12.08.2011 US 201161522770 P; 18.07.2012 US 201213551968
(71) Applicant: Delphi Technologies, Inc., Troy, MI 48007 (US)
(72) Inventor: Hickox, Jeffrey Michael, Middlefield, OH Ohio 44062 (US)
(74) Representative: Denton, Michael John

(57) **Abstract**

A vehicle parking assist system (10) of a wireless battery charger for positioning a capture resonator (16) or receiving plate attached to a vehicle (14) over a source resonator (18) or charging pad residing on a parking surface (20) under the vehicle (14). The system (10) includes a target (30) positioned relative to the source resonator (18) at a location that is viewable by an operator (28) of the vehicle (14) while the vehicle (14) is being parked. The vehicle (14) is equipped with a plurality of light sources (32) attached to the vehicle (14), and the light sources (32) are oriented so that when the vehicle (14) is properly positioned, light beams (34) from the light sources (32) impinge on the target (30) at one or more predetermined locations, or converge at some predetermined location on the target (30).

## Description

### TECHNICAL FIELD OF INVENTION

This disclosure generally relates to electric vehicle wireless battery chargers, and more particularly relates a system for assisting a vehicle operator to park the vehicle in alignment with a charging pad.

### BACKGROUND OF INVENTION

Electric vehicles and electric-hybrid vehicles are gaining in popularity with consumers. The electric motors in these vehicles are typically powered from multiple storage batteries disposed in a battery pack in the vehicle. If the battery needs to be recharged while the vehicle is parked, a plug or leaded charge-coupling device is connected to the vehicle, typically by the vehicle operator. However, some operators object to having to 'plug-in' their vehicle each time the vehicle is parked.

Wireless or connector less battery chargers have been proposed, see United States Patent Number 5,498,948 issued March 12, 1996 to Bruni et al., and United States Patent Number 8,008,888 issued August 30, 2011to Oyobe et al. A wireless battery charger marketed by Delphi of Troy, Michigan includes a source resonator or charging pad lying on a parking surface under the vehicle being charged, and a corresponding capture resonator or receiving plate mounted underneath the vehicle. The source resonator and capture resonator in this one example are about five hundred millimeters by five hundred millimeters square (500mm x 500mm). Such wireless battery chargers are most efficient when the vehicle is parked such that the source resonator and the capture resonator are horizontally (i.e. - laterally and longitudinally) aligned. However, as the source resonator and the capture resonator are underneath the vehicle, it is difficult for the vehicle operator to judge where to park the vehicle so that the source resonator and the capture resonator are aligned.

### SUMMARY OF THE INVENTION

In accordance with one embodiment, a vehicle parking assist system for positioning a capture resonator attached to a vehicle over a source resonator residing on a parking surface under the vehicle is provided. The system includes a target and a plurality of light sources. The target is positioned relative to the source resonator at a location viewable by an operator of the vehicle while the vehicle is being parked. The plurality of light sources are configured to be attached to the vehicle and oriented so that when the vehicle is properly positioned, light beams from the light sources impinge on the target at one or more predetermined locations.

In another embodiment, a vehicle equipped for wireless battery charging is provided. The vehicle includes a capture resonator and a plurality of light sources. The capture resonator is attached to the vehicle. The capture resonator is configured to receive energy for charging a vehicle battery from a source resonator residing on a parking surface under the vehicle. The plurality of light sources are attached to the vehicle and configured to be oriented so that when the vehicle is properly positioned, light beams from the light sources impinge on a target at one or more predetermined locations.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:

Fig. 1 is a side view of a vehicle parking assist system being used to park a vehicle in accordance with one embodiment; and

Fig. 2 is a perspective view of the vehicle parking assist system of Fig. 1 being used to park the vehicle in accordance with one embodiment.

### DESCRIPTION OF THE PREFERRED EMBODIMENTS

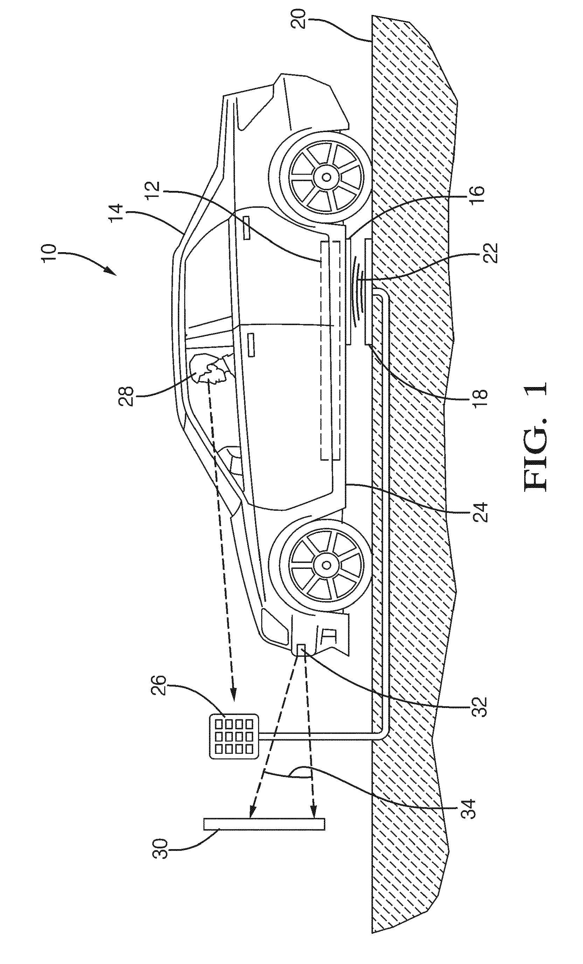

Fig. 1 illustrates a non-limiting example of a vehicle parking assist system, hereafter the system 10. The system 10 may be part of a wireless battery charger for charging a battery 12 in a vehicle 14. To charge the battery 12, the vehicle 14 is equipped with a capture resonator 16 attached to the vehicle 14. The capture resonator 16 in this non-limiting example is located on the underside 24 of the vehicle 14 and is configured to receive energy 22 (i.e. electromagnetic energy) for charging the battery 12 from a source resonator 18 residing on a parking surface 20 under the vehicle 14. The parking surface may be inside a garage owned by the owner of the vehicle, or may be in a public parking lot that provides electric vehicle recharging services.

The battery charger may include a charging controller, hereafter the controller 26, for controlling how much energy 22 is emitted by the source resonator 18. The controller 26 may include a processor (not shown) such as a microprocessor or other control circuitry as should be evident to those in the art. The controller 26 may also include a radio frequency (RF) transceiver able to communicate with the vehicle 14 in order to determine a state of charge of the battery 12. The controller 26 may also include memory (not shown), including non-volatile memory, such as electrically erasable programmable read-only memory (EEPROM) for storing one or more routines, thresholds and captured data. The one or more routines may be executed by the processor to perform steps for determining if RF signals received by the controller 26 indicate that the battery 12 needs charging.

It should be appreciated that the more closely the capture resonator 16 is aligned with the source resonator 18, the more efficiently the energy 22 is transferred from the source resonator 18 to the capture resonator 16. Furthermore, it should be appreciated that since the capture resonator 16 and the source resonator 18 are underneath the vehicle 14, it may be difficult for an operator 28 to maneuver the vehicle 14 to a position where the capture resonator 16 is horizontally (i.e. - laterally and longitudinally) aligned with source resonator 18. By way of example and not limitation, the vertical separation between the capture resonator 16 and the source resonator 18 is typically about fifteen centimeters to twenty centimeters (15-20cm)

To assist the operator 28 with parking the vehicle 14 so the capture resonator 16 is aligned with the source resonator 18, the system 10 includes a target 30 positioned some known, fixed, or predetermined distance from the source resonator 18. As will become apparent in the description that follows, the target 30 is preferably positioned so that the target 30 is viewable by the operator 28 while parking the vehicle 14. For example, the target 30 may be mounted on a post at the front of a parking space, or may be mounted on a garage wall at the operator's home.

The system 10 also includes a plurality of light sources 32 configured to be attached to the vehicle 14, for example attached to the front bumper or integrated into a headlight assembly of the vehicle 14. The light sources 32 may be added to the vehicle 14 as an aftermarket modification, or may be a feature of the vehicle 14 when it is originally manufactured. In one embodiment, the light sources 32 are lasers, for example light emitting diode (LED) type lasers that are readily available from several suppliers. Lasers are thought to be preferable as sufficient laser light brightness is readily available for daylight use. However, it is recognized that other light sources may be suitable. The light sources 32 are preferably configured to be oriented so that when the vehicle 14 is properly positioned relative to the source resonator 18, light beams 34 from the light sources 32 impinge on the target 30 at one or more predetermined locations.

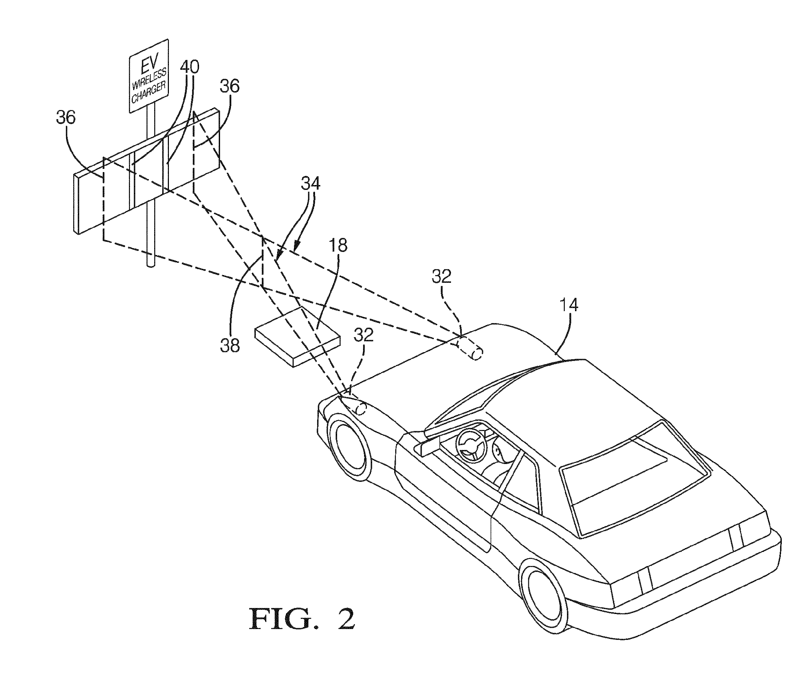

Fig. 2 further illustrates a non-limiting example of how the target 30 and the light beams 34 cooperate to assist the operator 28 with locating the vehicle 14 so the capture resonator 16 and the source resonator 18 are aligned. In one embodiment, the light sources 32 are each configured to emit a light beams 34 that form vertical lines 36 on the target 30. Lasers can be used to 'draw' the vertical lines 36 by providing a suitable lens for the laser, or by variably deflecting the laser beam using a MicroElectroMechanical (MEMS) mirror.

In one embodiment, the light sources 32 may be oriented so the light beams 34 converge on the target 30 when the vehicle 14 is properly positioned. As shown in Fig. 2, the vehicle is illustrated as being too far away from the target 30 and so a convergence line 38 formed by the intersection of the light beams 34 is between the vehicle 14 and the target 30. It should be appreciated that as the vehicle 14 moves forward, the vertical lines 36 on the target 30 will move closer together until they converge when the convergence line 38 is at the surface of the target 30.

The target 30 may also include limit markers 40 to indicate how close together the vertical lines 36 must be to align adequately the capture resonator 16 and the source resonator 18. That is, the operator 28 does not need to locate precisely the vehicle 14 so only the convergence line 38 appears on the target, but the alignment is close enough. The separation distance between the limit markers 40 would be determined empirically or mathematically based on the geometry of the light beams 34 and how much misalignment the capture resonator 16 and the source resonator 18 can tolerate. The limit markers may also be useful to indicate how well the vehicle 14 is lateral (i.e. left/right) aligned by how well centered the convergence line 38 is located between the limit markers 40.

While Fig. 2 suggests only two light sources, it is appreciated that additional light sources may be useful to provide other alignment aids for parking the vehicle. It is also contemplated that other target arrangements are feasible, such as a second target alongside the vehicle 14. In addition, other alignment aids that indicate the 'squareness' of the vehicle 14 to the target 30 are contemplated to further indicate the lateral (i.e. left/right) alignment of t the capture resonator 16 and the source resonator 18. It is also contemplated that the light sources 32 may include adjustment aids to customize the orientation of the light beams 34 for instances where the target may be located on a garage wall, and/or elevated to accommodate various parking facility configurations.

Accordingly, a vehicle parking assist system (the system 10), and a vehicle 14 equipped with to operate with the system 10 is provided. Having the light beams 34 projected onto the target 30 provides a simple, easy to understand means for the operator 28 to park the vehicle 14 so that the capture resonator 16 and the source resonator 18 are adequately aligned for efficient charging of the battery 12.

## Claims

1. A vehicle parking assist system (10) for positioning a capture resonator (16) attached to a vehicle (14) over a source resonator (18) residing on a parking surface (20) under the vehicle (14), said system (10) comprising:
a target (30) positioned relative to the source resonator (18) at a location viewable by an operator (28) of the vehicle (14) while the vehicle (14) is being parked; and
a plurality of light sources (32) configured to be attached to the vehicle (14) and oriented so that when the vehicle (14) is properly positioned, light beams (34) from the light sources (32) impinge on the target (30) at one or more predetermined locations.

2. The system (10) in accordance with claim 1, wherein the light beams (34) converge on the target (30) when the vehicle (14) is properly positioned.

3. The system (10) in accordance with claim 1, wherein the light sources (32) are each configured to emit a light beam (34) that forms a vertical line on the target (30).

4. The system (10) in accordance with claim 1, wherein the light sources (32) are lasers.

5. The system (10) in accordance with claim 1, wherein the system (10) further comprises the capture resonator (16), the source resonator (18), and a charging controller (26) configured to control energy (22) emitted by the source resonator (18).

6. A vehicle (14) equipped for wireless battery charging, said vehicle (14) comprising:
a capture resonator (16) attached to the vehicle (14), said capture resonator (16) configured to receive energy (22) for charging a vehicle (14) battery (12) from a source resonator (18) residing on a parking surface (20) under the vehicle (14); and
a plurality of light sources (32) attached to the vehicle (14) and configured to be oriented so that when the vehicle (14) is properly positioned, light beams (34) from the light sources (32) impinge on a target (30) at one or more predetermined locations.
